# EUROPÄISCHE PATENTSCHRIFT

(11) **EP 1 862 241 B1**
(45) Veröffentlichungstag und Bekanntmachung des Hinweises auf die Patenterteilung: **05.10.2011**
(21) Anmeldenummer: 06011557.3
(22) Anmeldetag: 03.06.2006
(51) Int. Cl.: B23B 31/19

(54) **Kraftspannfutter**
Powered Chuck
Mandrin de serrage actionné mécaniquement

(43) Veröffentlichungstag der Anmeldung: 05.12.2007
(73) Patentinhaber: SMW-AUTOBLOK Spannsysteme GmbH, 88074 Meckenbeuren (DE)
(72) Erfinder: Rehm, Fritz, 88094 Oberteuringen (DE)
(74) Vertreter: Engelhardt, Guido

(56) Entgegenhaltungen:
- DE-A1- 1 477 884
- DE-U1- 29 910 130
- US-A- 3 420 538

## Beschreibung

Die Erfindung bezieht sich auf ein Kraftspannfutter mit einem in einem Futterkörper axial verschiebbar geführten Kolben, der mit zwei oder mehreren Spannfingern trieblich verbunden ist, die axial verschiebbar und mittels einer Steuerkurve begrenzt verdrehbar in dem Futterkörper angeordnet und mit auf das einzuspannende Werkstück einwirkenden auswechselbaren Spannbacken versehen sind.

Ein Kraftspannfutter dieser Art, das sich in der Praxis insbesondere zum Einspannen von Werkstücken auf Vertikaldrehmaschinen bewährt hat, wird von der SMW-Autoblok Spannsysteme GmbH, 88070 Meckenbeuren, unter der Bezeichnung DFR-ABS-KOMBI angeboten und ist außerdem aus der DE 299 10 130 U1 bekannt. Der Oberbegriff Anspruch 1 basiert auf diesem Dokument. In der DE 299 10 130 U1 sind an einem von einem Betätigungselement bewegbaren Träger Spannfinger angeordnet. Die Spannbacken sind bei der erstgenannten Ausgestaltung auf den Spannfingern über eine Nut-Feder-Verbindung abgestützt und mittels längerer Schrauben an den Spannfingern befestigt. Außerdem ist zur Verdrehsicherung jeweils ein Querstift erforderlich, der in die Spannbacke eingesetzt ist und in eine offene Nut des Spannfingers eingreift. Durch eine auf den Spannbacken und den Spannfinger aufgeschobene Hülse sollen Verschmutzungen im Bereich der Trennstelle der aufeinandergesetzten Bauteile verhindert werden.

Die Verbindung der Spannbacken mit den Spannfingern ist somit sehr aufwendig aber dennoch nicht zufriedenstellend. Durch Kippkräfte, die durch das Einspannen eines Werkstückes hervorgerufen werden, können nämlich, da eine ausreichende Führung der Spannbacken nicht gegeben ist, Verformungen auftreten, so dass damit Spannungenauigkeiten unumgänglich sind. Vor allem aber ist von Nachteil, dass ein Backenwechsel sehr zeitaufwendig ist und oftmals viel Geschick erfordert. Insbesondere bei Vertikaldrehmaschinen mit lotrecht angeordneter Maschinenspindel sind nämlich die Spannbacken schlecht zugänglich, so dass das Lösen der einzelnen Bauteile voneinander, indem die Verbindungsschrauben von Hand aus den Spannfingern geschraubt werden, vielfach nur unter Schwierigkeiten zu bewerkstelligen ist. Kurzfristig ist demnach bei dem bekannten Fingerfutter ein Backenwechsel nicht vorzunehmen, auch werden dazu Werkzeuge benötigt und die Verbindungsschrauben können verloren werden. Die entstehenden Rüstzeiten sind demnach bei schwieriger Handhabung hoch.

Aufgabe der Erfindung ist es daher, ein Kraftspannfutter der vorgenannten Gattung in der Weise auszubilden, dass Spannbacken in kurzer Zeit und ohne dass dazu Werkzeuge benötigt werden, von den Spannfingern gelöst und erneut auf diese aufgesetzt werden können. Die erforderliche Zeitspanne zum Umrüsten eines auf einer Werkzeugmaschine angeordneten Kraftspannfutters soll somit gering gehalten werden. Vor allem aber soll eine stets sichere Abstützung eines Spannbackens auf einem Spannfinger gewährleistet sein, ohne dass durch Kippmomente die Spanngenauigkeit beeinträchtigt wird. Der Bauaufwand, mittels dem dies zu bewerkstelligen ist, soll gering gehalten werden, dennoch soll eine stets sichere Abstützung und Halterung der Spannbacken gegeben sein.

Gemäß der Erfindung wird dies bei einem Kraftspannfutter der eingangs genannten Art dadurch erreicht, dass die Spannbacken jeweils über eine Federraste oder über einen Bajonettverschluss mit den Spannfingern formschlüssig verbunden sind.

Zweckmäßig ist es hierbei, die Spannbacken als Winkelstücke zu gestalten, und deren achsparallel verlaufende Schenkel sollten die Form einer Hülse aufweisen, in die die Spannfinger eingreifen.

Die Federraste zur Verbindung des Spannfingers mit dem Spannbacken sollte in einfacher Ausgestaltung durch einen in eine in den Spannfinger achssenkrecht zu diesem verlaufenden Bohrung verschiebbar eingesetzten Raststift und einer diesem zugeordneten in der Hülse des Spannbackens vorgesehenen Ausnehmung gebildet sein, in die der Raststift zur Verriegelung der Spannbacken mit dem Spannfinger eingreift.

Der Raststift sollte entgegen der Kraft einer Druckfeder verschiebbar in der Bohrung angeordnet sein, und diesem sollte ein auf der Hülse des Spannbackens z.B. mittels einer federnden Lasche gehaltenes Druckstück zugeordnet sein, mittels dem der Raststift zum Lösen des Spannbackens von dem Spannfinger entgegen der Kraft der Druckfeder in den Spannfinger rückführbar ist.

Die Bajonettverschlüsse können jeweils durch einen in den Spannfinger eingesetzten Bolzen, der ein- oder beidseitig über dessen Außenmantelfläche übersteht, und eine in die Hülse des Spannbackens eingearbeitete, winkel- oder u-förmig gestaltete und einseitig offene Nut zur Aufnahme des Bolzens gebildet sein, wobei die Nut des Bajonettverschlusses mit einer Hinterschneidung zur Aufnahme des Bolzens in Spannstellung der Spannbacken versehen sein sollte.

Bei dieser Ausführungsvarianten ist es ferner angezeigt, den Spannbacken über eine Druckfeder an dem Spannfinger abzustützen, die in eine in den Spannfinger eingearbeitete axial gerichtete Ausnehmung eingesetzt ist und auf einen Stift einwirkt, der den Spannfinger überragt und an dem Spannbacken anliegt.

Wird ein Kraftspannfutter gemäß der Erfindung ausgebildet, so ist es ohne Schwierigkeiten möglich, die Spannbacken von den Spannfingern abzunehmen und durch Spannbacken einer anderen Größe zu ersetzen, ohne dass dazu Werkzeuge erforderlich sind. Die Verriegelung der Spannbacken mit den Spannfingern mittels Federrasten oder Bajonettverschlüssen ermöglicht es nämlich, dass mittels eines Druckstückes oder durch eine Drehbewegung die Verbindung zu lösen ist, so dass auch unter schwierigen Einbaugegebenheiten die Spannbacken leicht abgenommen werden können. Auch das Aufrasten von Spannbacken auf den Spannfingern ist in ähnlicher Weise problemlos zu bewerkstelligen.

Die bei einem Backenwechsel erforderlichen Rüstzeiten können somit kurz gehalten werden, dennoch ist stets eine sichere Abstützung der Spannbacken auf den Spannfingern, da diese auf einer größeren Wegstrecke von den Spannbacken übergriffen und Kippmomente demnach aufgefangen werden, sichergestellt. Mit großem Bauaufwand wird somit bei einem Fingerfutter ein Backenwechsel, der einfach zu handhaben ist, ermöglicht, eine sichere Halterung der Spannbacken auf den Spannfingern ist aber dennoch gewährleistet.

In der Zeichnung sind zwei Ausführungsbeispiele eines gemäß der Erfindung ausgebildeten Kraftspannfutters dargestellt, die nachfolgend im Einzelnen erläutert sind. Hierbei zeigt:
- Figur 1: ein Kraftspannfutter mit auf Spannfingern angebrachten Spannbacken, die jeweils mittels einer Federraste miteinander formschlüssig verbunden sind, in unterschiedlichen Betriebsstellungen,
- Figur 2: das Kraftspannfutter nach Figur 1 mit durch Bajonettverschlüsse verriegelten Spannbacken, ebenfalls in zwei unterschiedlichen Betriebsstellungen des Spannfutters, und

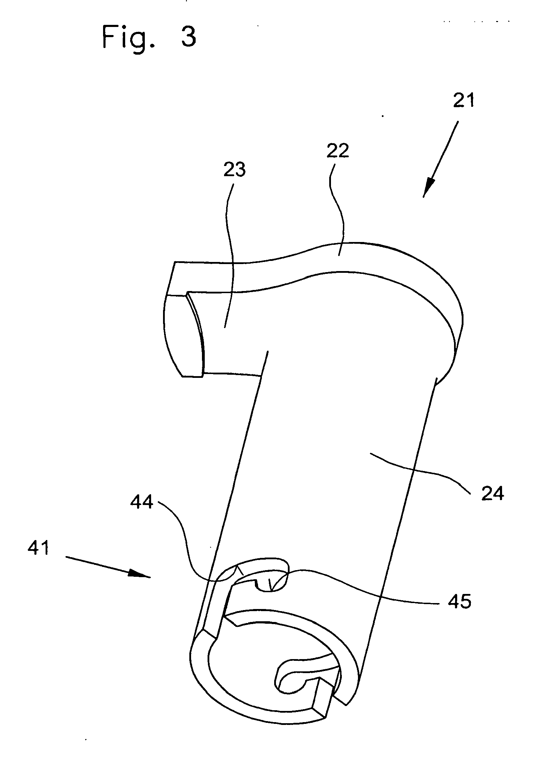

- Figur 3: einen bei dem Spannfutter nach Figur 2 eingesetzten Spannbacken in perspektivischer Darstellung.

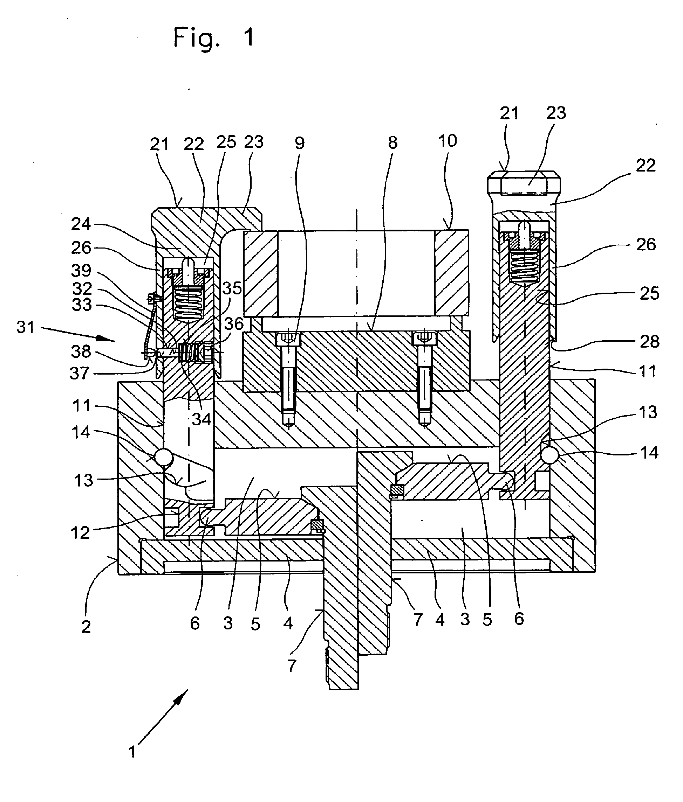

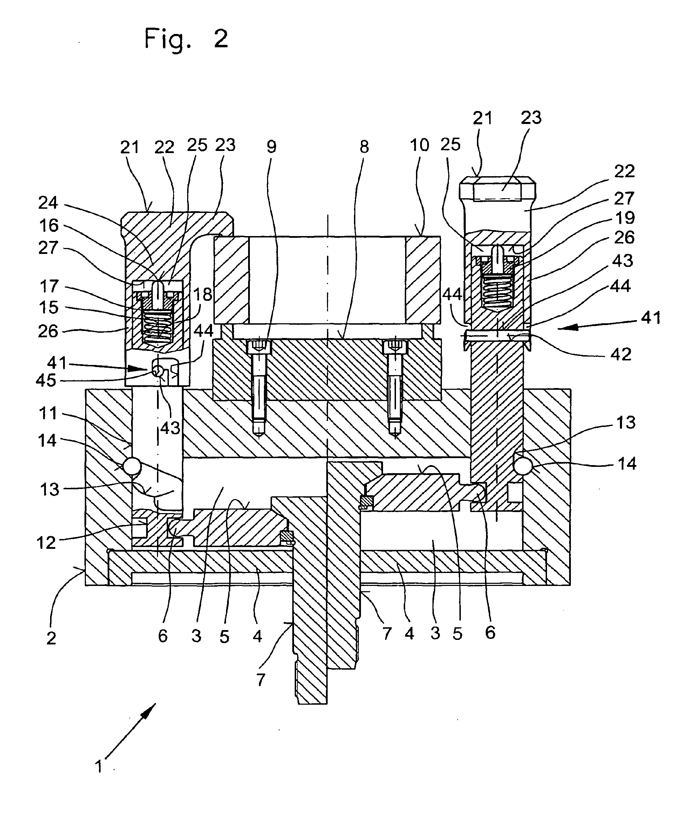

Das in den Figuren 1 und 2 dargestellte und jeweils mit 1 bezeichnete Kraftspannfutter dient zur Halterung von unterschiedlich ausgebildeten Werkstücken 10, um diese z.B. auf einer Vertikaldrehmaschine bearbeiten zu können, und besteht im Wesentlichen aus mehreren in einem Futterkörper 2 verstellbar eingesetzten Spannfingern 11, die über Spannbacken 21 auf das Werkstück 10 einwirken, das gegen eine Auflageplatte 8 pressbar ist, die mittels Schrauben 9 an dem Futterkörper 2 befestigt ist. Zur Betätigung der Spannfinger 11 dient ein in einem Hohlraum 3 des Futterkörpers 2 eingesetzter Kolben 5, der mittels eines umlaufenden Ansatzstückes 6 mit den Spannfingern 11 in Triebverbindung steht. Die Spannfinger 11 sind dazu mit Nuten 12 versehen, in die das Ansatzstück 6 eingreift. Der in dem durch einen Deckel 4 verschlossenen Hohlraum 3 eingesetzte Kolben 5 ist mit einer Zugstange 7 ausgestattet, auf die eine Servoeinrichtung einwirkt, so dass der Kolben 5 axial in beiden Richtungen verstellbar ist.

Das Einspannen und Lösen des Werkstückes 10 wird durch Axialverstellungen des Kolbens 5 bewerkstelligt, indem bei dessen Verstellbewegungen die Spannfinger 11 und die mit diesen fest verbundenen Spannbacken 21 um etwa 90° verdreht werden, so dass die Spannbacken 21, wie dies in den linken Hälften der Figuren 1 und 2 gezeigt ist, auf dem Werkstück 10 anliegen und gegen dieses gepresst werden. Gemäß den Darstellungen in den rechten Hälften der Figuren 1 und 2 sind zum Bestücken des Kraftspannfutters 1 die Spannfinger 11 und die Spannbacken 21 von dem Werkstück 10 gelöst und von diesem weggedreht.

Die Spannfinger 11 sind, um die Verdrehbewegungen durch Axialverschiebungen des Kolbens 5 vorzunehmen, mit Steuerkurven 13 in Form von Wendeln ausgestattet, und in den Futterkörper 2 sind Stifte 14 eingesetzt, an denen die Steuerkurven 13 anliegen. Durch die ortsfest angeordneten Stifte 14 wird somit bei einer Axialverschiebung der Spannfinger 11 deren Verdrehung bewerkstelligt.

Die Spannbacken 21 sind in Form von Winkelstücken 22 ausgebildet, deren Schenkel 23 in Spannstellung das Werkstück 10 übergreifen und deren parallel zur Längsachse des Spannfutters 1 verlaufender Schenkel 21 als Hülse 26 ausgebildet ist, indem in diese eine Sacklochbohrung 25 eingearbeitet ist. In die Bohrungen 25 greifen die Spannfinger 11 ein, so dass die beim Einspannen des Werkstückes 10 hervorgerufenen Kräfte von den Hülsen 26 auf den Spannfingern 11 abgestützt sind.

Zur formschlüssigen, aber lösbaren Verbindung der Spannbacken 21 mit den Spannfingern 11 sind gemäß der Ausführungsvariante nach Figur 1 Federrasten 31 vorgesehen, die jeweils aus einem in einer in den Spannfingern 11 eingearbeiteten Querbohrung 32, die als Stufenbohrung ausgebildet ist, eingesetzten Querstift 33 und aus einer auf einen an diesem angeformten Bund 34 einwirkenden Druckfeder 35 bestehen. Die Druckfeder 35 stützt sich an einer in die Bohrung 32 eingeschraubten Scheibe 36 ab und drückt den Querstift 33 in Richtung der Hülse 26, die zur Aufnahme des Querstiftes 33 mit einer Bohrung 37 versehen ist. Beim Einrasten des Querstiftes 33 in die Bohrung 37, wie dies in der linken Hälfte der Figur 1 dargestellt ist, ist somit der Spannbacken 21 mit dem Spannfinger 31 verriegelt.

Zum Lösen des Spannbackens 21 von dem Spannfinger 11 ist lediglich mittels eines Druckstückes 38, das mittels einer federnden Lasche 39 in Höhe der Bohrung 37 angeordnet ist, auf den Querstift 33 einzuwirken und dieser ist somit nach innen in die Bohrung 32 zurückzudrücken, bis ein Eingriff in die Bohrung 37 der Hülse 26 nicht mehr gegeben ist. In dieser Lage des Querstiftes 33 kann die Spannbacke 21 von dem Spannfinger 31 abgenommen werden.

Bei abgenommenem Spannfinger 31 ragt zwar der Querstift 33 aus der Bohrung 32 des Spannfingers 11 heraus, sobald aber ein Spannbacken 21 auf diesen aufgesetzt wird, wird durch eine an dem Ende der Hülse 26 angearbeitete Schrägfläche 28 der Querstift 33 entgegen der Kraft der Feder 36 zurückgedrückt, so dass die Spannbacke 21 über den Querstift 33 hinweggeschoben werden kann. Sobald jedoch die Bohrung 37 in Höhe des Querstiftes 33 verläuft, rastet der Querstift 33 in die Bohrung 37 ein und die Spannbacke 21 ist in dem Spannfinger 11 verriegelt.

Bei der Ausgestaltung nach Figur 2 ist zur formschlüssigen Verbindung des Spannbackens 21 mit dem Spannfinger 11 ein Bajonettverschluss 41 vorgesehen, der aus einem in den Spannfinger 11 eingearbeiteten Bohrung 42 eingesetzten Stift 43 und einer in der Hülse 26 vorgesehenen U-förmig gestalteten und stirnseitig offenen Steuerkurve 44 besteht. Die Steuerkurve 44 ist hierbei mit einer Hinterschneidung 45 versehen, um den Spannbacken 21 gegen Verdrehen zu sichern. Der Querstift 33 überragt die Außenmantelfläche des Spannfingers 11, so dass er in die Steuerkurve 44 eingreifen kann.

Zum Wechseln eines Spannbackens ist dieser in der in der rechten Hälfte der Figur 2 gezeigten Betriebsstellung geringfügig niederzudrücken, um den Stift 43 aus der Hinterschneidung 45 zu lösen. Durch geringfügiges Verdrehen und nachfolgender Axialverschiebung kann sodann der Spannbacken 21 von dem Spannfinger 11 abgenommen werden.

Um bei der Ausgestaltung nach Figur 2 einen stets sicheren Eingriff des Stiftes 43 in der Hinterschneidung 45 zu gewährleisten, ist in einer axial gerichteten Bohrung 15 des Spannfingers 11 ein mit einem Bund 17 versehener Bolzen 16 eingesetzt, auf den eine Druckfeder 18 einwirkt. Der Bolzen 16 stützt sich mit einem Bund 17 in einer in die Bohrung 15 eingeschraubten Scheibe 19 ab und liegt an der Stirnfläche 27 der Bohrung 25 an. Auf diese Weise wird stets eine durch die Druckfeder 18 bestimmte Kraft auf den Spannbacken 21 ausgeübt, so dass auch im unbelasteten Zustand der Spannbacken 21 der Bolzen 43 in der Hinterschneidung 44 arretiert ist.

Auch bei der Ausgestaltung nach Figur 1 kann, um Fertigungstoleranzen auszugleichen, in gleicher Weise eine Abstützung der Spannbacken 21 durch den Stift 16 und die Druckfeder 18 vorgesehen werden.

## Patentansprüche

1. Kraftspannfutter (1) mit einem in einem Futterkörper (2) axial verschiebbar geführten Kolben (5), der mit zwei oder mehreren Spannfingern (11) trieblich verbunden ist, die axial verschiebbar und mittels einer Steuerkurve (13) begrenzt verdrehbar in dem Futterkörper (2) angeordnet und mit auf das einzuspannende Werkstück (10) einwirkenden auswechselbaren Spannbacken (21) versehen sind,
**dadurch gekennzeichnet**
**dass** die Spannbacken (21) jeweils über eine Federraste (31) oder über einen Bajonettverschluss (41) mit den Spannfingern (11) formschlüssig verbunden sind.

2. Kraftspannfutter nach Anspruch 1,
**dadurch gekennzeichnet,**
**dass** die Spannbacken (21) als Winkelstücke (22) gestaltet sind und dass deren achsparallel verlaufende Schenkel (24) die Form einer Hülse (26) aufweisen, in die die Spannfinger (11) eingreifen.

3. Kraftspannfutter nach einem der Ansprüche 1 oder 2,
**dadurch gekennzeichnet,**
**dass** die Federraste (31) zur Verbindung des Spannfingers (11) mit dem Spannbacken (21) durch einen in eine in den Spannfinger(11) achssenkrecht zu diesem verlaufenden Bohrung (32) verschiebbar eingesetzten Raststift (33) und einer diesem zugeordneten in der Hülse (26) der Spannbacke (21) vorgesehenen Ausnehmung (37) gebildet ist, in die der Raststift (33) zur Verriegelung der Spannbacke (21) mit dem Spannfinger (11) eingreift.

4. Kraftspannfutter nach Anspruch 3,
**dadurch gekennzeichnet,**
**dass** der Raststift (33) entgegen der Kraft einer Druckfeder (35) verschiebbar in der Bohrung (32) angeordnet ist.

5. Kraftspannfutter nach einem der Ansprüche 3 oder 4,
**dadurch gekennzeichnet,**
**dass** dem Raststift (33) ein auf der Hülse (26) des Spannbackens (21) z.B. mittels einer federnden Lasche (39) gehaltenes Druckstück (38) zugeordnet ist, mittels dem der Raststift (33) zum Lösen des Spannbackens (21) von dem Spannfinger (11) entgegen der Kraft der Druckfeder (35) in den Spännfinger(11) rückführbar ist.

6. Kraftspannfutter nach Anspruch 2 oder 1,
**dadurch gekennzeichnet,**
**dass** der Bajonettverschluss (41) durch einen in den Spannfinger (11) eingesetzten Bolzen (43), der ein- oder beidseitig über dessen Außenmantelfläche übersteht, und eine in die Hülse (26) des Spannbackens (21) eingearbeitete Winkel oder u-förmig gestaltete und einseitig offene Nut (44) zur Aufnahme des Bolzens (43) gebildet ist.

7. Kraftspannfutter nach Anspruch 6,
**dadurch gekennzeichnet,**
**dass** die Nut (44) des Bajonettverschlusses (41) mit einer Hinterschneidung (45) zur Aufnahme des Bolzens (43) in Spannstellung des Spannbackens (21) versehen ist.

8. Kraftspannfutter nach einem der Ansprüche 1 bis 7,
**dadurch gekennzeichnet,**
**dass** der Spannbacken (21) über eine Druckfeder (18) an dem Spannfinger (11) abgestützt ist.

9. Kraftspannfutter nach Anspruch 8,
**dadurch gekennzeichnet,**
**dass** die Druckfeder (18) in eine in den Spannfinger (11) eingearbeitete Ausnehmung (15) eingesetzt ist und auf einen Stift (16) einwirkt, der den Spannfinger (11) überragt und an dem Spannbacken (21) anliegt.

## Claims

1. A powered chuck (1) with a piston (5) guided in an axially adjustable arrangement in a chuck body (2), in which the piston (5) is in a driving connection with two or more clamping fingers (11) which are axially adjustable and arranged in the chuck body (2) with their rotation limited by means of a control cam (13) and are provided with exchangeable clamping jaws (21) that act on the workpiece (10) to be clamped,
**characterized in that**,
each of the clamping jaws (21) is connected to the clamping fingers (11) in a form-locking arrangement by means of a spring detent (31) or a bayonet lock (41).

2. The powered chuck in accordance with Claim 1,
**characterized in that**,
the clamping jaws (21) are configured as angle pieces (22) and that their legs (24) running in parallel have the shape of a sleeve (26) in which the clamping fingers (11) engage.

3. The powered chuck in accordance with one of Claims 1 or 2,
**characterized in that**,
the spring detent (31) for connecting the clamping finger (11) to the clamping jaw (21) is formed by a detent pin (33) movably inserted in a hole (32) running in the clamping finger (11) with a parallel axis and by a recess (37) provided in the sleeve (26) of the clamping jaw (21) which is allocated to the detent pin (33) and in which the detent pin (33) engages in order to lock the clamping jaw (21) with the clamping finger (11).

4. The powered chuck in accordance with Claim 3,
**characterized in that**,
the detent pin (33) is arranged in the hole (32) and can be moved against the force of a compression spring (35).

5. The powered chuck in accordance with one of Claims 3 or 4,
**characterized in that**,
the detent pin (33) has a pressure piece (38) assigned to it, which is held on the sleeve (26) of the clamping jaw (21), e.g. by means of a spring-type link (39), by means of which the detent pin (33) can be moved back against the force of the compression spring (35) into the clamping finger (11) in order to release the clamping jaw (21) from the clamping finger (11).

6. The powered chuck in accordance with Claim 2 or 1,
**characterized in that**,
the bayonet lock (41) is formed by a pin (43) inserted in the clamping finger (11), in which case the pin (43) projects beyond the outer jacket surface of the clamping finger (11) at one or both ends, and by an elbow or U-shaped groove (44) open at one end which is worked into the sleeve (26) of the clamping jaw (21) in order to accommodate the pin (43).

7. The powered chuck in accordance with Claim 6,
**characterized in that**,
the groove (44) of the bayonet lock (41) is provided with an undercut (45) for accommodating the pin (43) in the clamped position of the clamping jaw (21).

8. The powered chuck in accordance with one of Claims 1 to 7,
**characterized in that**,
the clamping jaw (21) is supported on the clamping finger (11) by means of a compression spring (18).

9. The powered chuck in accordance with Claim 8,
**characterized in that**,
the compression spring (18) is inserted into a recess (15) worked into the clamping finger (11) and acts on a pin (16) which projects beyond the clamping finger (11) and is in contact with the clamping jaw (21).

## Revendications

1. Mandrin de serrage (1) comprenant un piston (5) axialement déplaçable dans un corps de mandrin (2) et relié par entraînement avec deux ou plusieurs éléments de serrage (11) qui se laissent déplacer axialement et, moyennant une came de commande (13) en rotation limitée dans le corps de mandrin (2), et équipés de mors de serrage (21) échangeables et agissant sur la pièce à usiner (10),
**caractérisé en ce que**
moyennant un crantage à ressort (31) ou une fermeture à baïonnette (41), les mors de serrage (21) respectifs sont reliés avec blocage aux éléments de serrage (11).

2. Mandrin de serrage d'après la revendication 1,
**caractérisé en ce que**
les mors de serrage (21) sont conçus sous la forme de pièces angulaires (22) et que leurs bras (24) orientés parallèlement à l'axe sont formés par une douille (26) dans laquelle s'insèrent les éléments de serrage (11).

3. Mandrin de serrage d'après une des revendications 1 ou 2,
**caractérisé en ce que**
le crantage à ressort (31) servant à la liaison de l'élément de serrage (11) avec le mors de serrage (21) est formé par un goujon de crantage (33) inséré de manière déplaçable dans un alésage (32) pratiqué dans l'élément de serrage (11) et orienté perpendiculairement par rapport à celui-ci, et d'un évidement (37) assigné à celui-ci et prévu dans la douille (26) du mors de serrage (21), dans lequel s'insère le goujon de crantage (33) pour le verrouillage du mors de serrage (21) avec l'élément de serrage (11).

4. Mandrin de serrage d'après la revendication 3,
**caractérisé en ce que**
le goujon de crantage (33) est logé de manière déplaçable contre la force d'un ressort de pression (35) dans l'alésage (32).

5. Mandrin de serrage d'après une des revendications 3 ou 4,
**caractérisé en ce que**,
au goujon de crantage (33), il est assigné une pièce de pression (38) retenue sur la douille (26) du mors de serrage (21) par exemple par une éclisse élastique (39), ce qui, pour desserrer le mors de serrage (21) de l'élément de serrage (11), permet de ramener le goujon de crantage (33) contre la force du ressort de pression (35) dans l'élément de serrage (11).

6. Mandrin de serrage d'après une des revendications 1 ou 2,
**caractérisé en ce que**
la fermeture à baïonnette (41) est formée par un boulon (43) inséré dans l'élément de serrage (11) et saillant d'un côté ou des deux côtés au-delà de son enveloppe extérieure, et d'une gorge angulaire ou de forme en U (44) pratiquée dans la douille (26) du mandrin de serrage (21) et ouverte d'un côté pour recevoir le boulon (43).

7. Mandrin de serrage d'après la revendication 6,
**caractérisé en ce que**
la gorge (44) de la fermeture à baïonnette (41) est munie d'une contre-dépouille (45) pour recevoir le boulon (43) en position de serrage du mors de serrage (21).

8. Mandrin de serrage d'après une ou plusieurs des revendications 1 à 7,
**caractérisé en ce que**
moyennant un ressort de pression (18), le mors de serrage (21) s'appuie sur l'élément de serrage (11).

9. Mandrin de serrage d'après la revendication 8,
**caractérisé en ce que**
le ressort de pression (18) est inséré dans un évidement (15) pratiqué dans l'élément de serrage (11) et agit sur un goujon (16) saillant de l'élément de serrage (11) et portant sur le mors de serrage (21).
